# EUROPÄISCHE PATENTSCHRIFT

(11) **EP 3 160 758 B1**
(45) Veröffentlichungstag und Bekanntmachung des Hinweises auf die Patenterteilung: **18.04.2018**
(21) Anmeldenummer: 16733493.7
(22) Anmeldetag: 28.06.2016
(51) Int. Cl.: B60B 33/04, B60G 11/00, B60B 35/00, B60B 35/04, B62B 3/06, B62B 3/00

(54) **LAGERUNG FÜR STÜTZROLLE**
BEARING FOR SUPPORTING ROLLER
SUPPORT POUR ROULEAU D'APPUI

(30) Priorität: 30.06.2015 DE 202015103436 U
(43) Veröffentlichungstag der Anmeldung: 03.05.2017
(73) Patentinhaber: Blickle Räder + Rollen GmbH & Co.KG, 72348 Rosenfeld (DE)
(72) Erfinder: HÖLLE, Rolf, 72348 Rosenfeld (DE)
(74) Vertreter: Holzwarth-Rochford, Andreas
(86) Internationale Anmeldenummer: PCT/EP2016/065061
(87) Internationale Veröffentlichungsnummer: WO 2017/001432

(56) Entgegenhaltungen:
- EP-B2- 1 147 968
- DE-U1-202006 020 569
- US-B1- 6 425 161

## Beschreibung

Die vorliegende Erfindung betrifft eine Lagerung für zumindest eine sich auf zumindest einer Auflagefläche abstützende Stützrolle eines Wagens, umfassend zumindest eine um zumindest eine Drehachse drehbare Achseinrichtung, zumindest eine mitnahmesicher mit der Achseinrichtung verbundene Wippe, wobei die Wippe an einem der Achseinrichtung gegenüberliegenden Ende zumindest eine erste Verbindungseinrichtung zur Verbindung der Wippe mit der Stützrolle aufweist, zumindest eine Federeinrichtung, die mechanisch zwischen einerseits der Achseinrichtung und/oder der Wippe und andererseits zumindest einer Halteeinrichtung angeordnet ist, wobei mittels der Federeinrichtung auf die Achseinrichtung und die Wippe eine die Stützrolle auf die Auflagefläche zwingende Kraft aufbaubar ist, und zumindest eine Dämpfungseinrichtung, mittels der eine Drehbewegung der Achseinrichtung um die Drehachse dämpfbar ist.

Aus dem Stand der Technik sind verschiedene Lagerungen für Stützrollen eines Fahrzeugs bekannt.

So offenbart die DE 10 2013 112 633 A1 einen Deichselhubwagen. Dieser Deichselhubwagen weist ein Fahrwerk auf, welches eine Koppelschwinge aufweist. Die Koppelschwinge ist um eine Koppelschwingachse drehbar gelagert, wobei an der Koppelschwingachse darüber hinaus Umlenkhebel als auch Radanbindungen angeordnet sind.

Eine solche Koppelschwinge ist auch der EP 1 147 968 B2, die einen Gabelhubwagen mit einem Fünfradfahrwerk offenbart, bekannt. Dieser Gabelhubwagen weist eine gattungsgemäße Lagerung auf. Dabei sind zwei Stützrollen mittels jeweiligen Lagerbauteilen an eine Koppelstange gekoppelt. Diese Koppelstange ist um eine horizontale Achse drehbar in einem Rahmen des Hubwagens gelagert. Es wird eine zentrale Stabilisierungsfeder, die sich am Rahmen des Gabelhubwagens abstützt vorgeschlagen. Diese wirkt so auf die Koppelstelle ein, dass auf die Stützrollen eine nach unten gerichtete Druckkraft übertragen wird, wobei mit der Koppelstange zusätzlich ein die Drehung der Koppelstange dämpfendes Dämpferelement zusammenwirkt. Als Dämpfungselement wird ein Hydraulikdämpfer vorgeschlagen. Darüber hinaus wird als Stabilisierungsfeder ein Torsionsstab vorgeschlagen. Dieser Torsionsstab ist in der hohl ausgebildeten Koppelstange angeordnet und ist an einem ersten Ende mit einer Drehmomentstütze verbunden. An dem gegenüberliegenden Ende ist der Torsionsstab in einem zylindrischen Bauteil, das in der Koppelstange verschweißt ist, angeordnet und drehmitnahmesicher mit diesem verbunden. Um eine Verbindung der Torsionsfeder mit der Drehmomentstütze zu ermöglichen, wird vorgeschlagen, dass der Torsionsstab mittels zweier Gleitbuchsen in der Koppelstange derartig gelagert ist, dass eine relative Bewegung der Koppelstange im Bereich der Gleitbuchse zu dem Torsionsstab ermöglicht wird. Nachteilig bei dieser gattungsgemäßen Lagerung ist jedoch, dass sie einen sehr komplizierten Aufbau aufweist, insbesondere eine Vielzahl von Einzelbauteilen, wie die Gleitbuchsen und der Hydraulikdämpfer, notwendig sind.

Schließlich offenbart die DE 198 07 849 A1 einen Gabelhubwagen mit verstellbaren Stützrollen. Es wird vorgeschlagen, dass Stützrollen über Lagerbauteile, die eine vertikale Drehung der Stützrollen ermöglichen, an einer Koppelstange befestigt sind. Die Koppelstange ist horizontal drehbar in Lagern gelagert, wobei die Drehung gegen eine von einem Vorspannzylinder aufgebaute Rückstellkraft erfolgt. Auch diese Lagerung eines Gabelhubwagens weist aufgrund der Anzahl von Einzelkomponenten einen komplizierten Aufbau auf. Dies erhöht die Fehleranfälligkeit und verringert damit die Ausfallsicherheit der Lagerung.

Es ist daher Aufgabe der vorliegenden Erfindung, die gattungsgemäße Lagerung derartig weiterzuentwickeln, dass die Nachteile des Stands der Technik überwunden werden, insbesondere eine Lagerung bereitgestellt wird, die einen einfachen Aufbau aufweist und damit eine geringere Fehleranfälligkeit führt.

Diese Aufgabe wird erfindungsgemäß dadurch gelöst, dass die Federeinrichtung und die Dämpfungseinrichtung zumindest bereichsweise einstückig durch zumindest ein zumindest bereichsweise gummielastisch ausgebildetes Torsionsfederelement ausgebildet sind.

Dabei wird mit der Erfindung auch vorgeschlagen, dass die Stützrolle zumindest ein um zumindest eine Rollachse drehbares Rollenelement umfasst, wobei vorzugweise das Rollenelement in zumindest einer Rollengabel gelagert ist, insbesondere die Rollengabel um zumindest eine im wesentlichen senkrecht zu der Rollachse und/oder der Drehachse verlaufende Schwenkachse gelagert ist, wobei vorzugsweise sich die Schwenkachse und Rollachse schneiden oder windschief zueinander verlaufen.

Weiterhin kann eine erfindungsgemäße Lagerung dadurch gekennzeichnet sein, dass das Fahrzeug in Form zumindest eine Trailers, zumindest eines Lastenwagens und/oder zumindest eines Hubwagens, vorzugweise eines Gabelhubwagens, insbesondere mit einem Fünfradfahrwerk, ausgebildet ist, und/oder zumindest eine Tragstruktur, wie zumindest einen Tragrahmen umfasst, wobei vorzugweise die Halteeinrichtung sich auf der der Federeinrichtung abgewandten mechanischen Seite zumindest indirekt an der Tragstruktur abstützt, insbesondere mit der Tragstruktur verbunden ist.

Besonders bevorzugte Ausführungsformen der Lagerung können dadurch gekennzeichnet sein, dass die Drehachse im Wesentlichen senkrecht zu der Normalenrichtung der Auflagefläche verläuft.

Weiterhin wird für die Lagerung vorgeschlagen, dass diese aufweist eine Mehrzahl von mit der Achseinrichtung verbundenen Wippen und/oder eine Mehrzahl von Stützrollen, wobei jede Wippe zumindest eine erste Verbindungseinrichtung zur Verbindung mit zumindest einer Stützrolle und/oder zur Verbindung der Wippe mit zumindest zwei Stützrollen umfasst und/oder die Lagerung von zumindest einer Koppelschwinge umfasst ist.

Weiterhin schlägt die Erfindung vor, dass einerseits die Achseinrichtung und andererseits die Wippe und/oder Wippen mittels zumindest einer zweiten Verbindungseinrichtung miteinander verbunden sind, wobei die zweite Verbindungeinrichtung vorzugweise zumindest eine kraftschlüssig, formschlüssig und/oder stoffschlüssig wirkende Verbindung umfasst, insbesondere zumindest eine Schweißverbindung, Schraubverbindung, Rastverbindung, Steckverbindung und/oder Pressverbindung.

Auch wird bevorzugt, dass die Federeinrichtung zumindest ein duroplastisches, thermoplastisches und/oder elastomeres Material, wie Polyurethan, Ethylen-Polypropylen-Dien-Kautschuk (EPDM), Kautschuk und/oder Gummi, umfasst.

Weiterhin kann eine erfindungsgemäße Lagerung dadurch gekennzeichnet sein, dass die Federeinrichtung mittels zumindest einer, vorzugsweise zumindest ein Halteelement umfassenden, dritten Verbindungseinrichtung mit der Achseinrichtung und/oder der Wippe bzw. zumindest einer Wippe verbunden ist, wobei vorzugsweise die dritte Verbindungseinrichtung zumindest eine kraftschlüssig, formschlüssig und/oder stoffschlüssig wirkende Verbindung umfasst, insbesondere zumindest eine Schweißverbindung, Adhäsionsverbindung, Vulkanisationsverbindung, Nut-Feder-Verbindung, Verbindung umfassend zumindest eine in zumindest eine Vertiefung eingreifende Erhebung, Steckverbindung, Rastverbindung und/oder Pressverbindung, wobei vorzugsweise die Federeinrichtung stoffschlüssig mit dem Halteelement und/oder das Halteelement formschlüssig mit der Wippe und/oder der Achseinrichtung verbunden ist bzw. sind.

Besonders bevorzugte Ausführungsformen der Erfindung sehen vor, dass die Achseinrichtung und/oder die Wippe, insbesondere im Bereich der zweiten Verbindungseinrichtung, zumindest eine metallisches Material und/oder, insbesondere im Bereich der dritten Verbindungseinrichtung, zumindest ein Kunststoffmaterial, vorzugsweise Hartkunststoffmaterial, umfasst bzw. umfassen.

Hierbei ist besonders bevorzugt, dass die Federeinrichtung mittels zumindest einer vierten Verbindungseinrichtung mit der Halteeinrichtung verbunden ist, wobei die vierte Verbindungseinrichtung vorzugsweise zumindest eine kraftschlüssige, formschlüssige und/oder stoffschlüssige Verbindung umfasst, insbesondere zumindest eine Schweißverbindung, Adhäsionsverbindung, Vulkanisationsverbindung, Nut-Feder-Verbindung, Verbindung umfassend zumindest eine in zumindest eine Vertiefung eingreifende Erhebung, Steckverbindung, Rastverbindung und/oder Pressverbindung.

Weiterhin schlägt die Erfindung vor, dass die Halteeinrichtung, insbesondere im Bereich der vierten Verbindungeinrichtung, und/oder das Haltelement zumindest ein Kunststoffmaterial, insbesondere ein Hartkunststoffmaterial, wie Polyamid, umfasst bzw. umfassen.

Eine besonders bevorzugte Ausführungsform der Lagerung sieht vor, dass die Dämpfungseinrichtung zumindest ein sich auf zumindest einer Reiboberfläche der Halteeinrichtung und/oder Federeinrichtung abstützendes und drehmitnahmesicher mit der Achseinrichtung und/oder der Wippe verbundenes Reibelement umfasst.

Bei der vorgenannten Ausführungsform ist besonders bevorzugt, dass eine Reibkraft, mit der sich das Reibelement auf der Reiboberfläche abstützt, mittels zumindest eines Einstellelements veränderbar ist.

Schließlich wird für die Erfindung vorgeschlagen, dass die Federeinrichtung zumindest bereichsweise von der Wippe und/oder der Achseinrichtung durchdrungen ist, wobei vorzugweise die Reiboberfläche auf einer der dritten Verbindungseinrichtung abgewandten Seite der Federeinrichtung ausgebildet ist.

Der Erfindung liegt somit die überraschende Erkenntnis zugrunde, dass dadurch, dass eine Federeinrichtung, die im Stand der Technik insbesondere als Torsionsfederstab ausgebildet wurde, durch ein Drehfederelement bzw. Torsionsfederelement das bereichsweise aus zumindest einem gummielastischen Material, wie Polyurethan, ausgebildet wird, der Aufbau der Lagerung, insbesondere eine Koppelschwinge deutlich vereinfacht werden kann. Insbesondere ermöglicht der Einsatz eines gummielastischen Drehfederelements, dass eine Dämpfungseinrichtung durch einen Reibdämpfer ausgebildet wird, der sich an dem Drehfederelement abstützt, so dass das Drehfederelement auch bereichsweise die Dämpfungseinrichtung ausbildet. Damit sind also die Federeinrichtung und die Dämpfungseinrichtung zumindest bereichsweise einstückig ausgebildet.

Unter Einstückigkeit wird verstanden, dass ein einstückig ausgebildetes Bauteil nicht zerstörungsfrei getrennt werden kann. Damit ist auch ein stoffschlüssig oder mittels einer Adhäsionsverbindung mit dem Drehfederelement verbundenes Bauteil, wie die Halteeinrichtung und/oder das Haltelement, einstückig mit der Federeinrichtung ausgebildet. Die Federeinrichtung kann also im Sinne der Erfindung als ein Mehrkomponenten-Bauteil ausgebildet sein, bei dem ein gummielastisches Element mit einem oder mehreren damit, vorzugsweise mittels Stoffschluss und/oder Adhäsion, verbundenen Elementen ausgebildet ist. Eine als Reibfläche wirkende Oberfläche der stoffschlüssig mit dem gummielastischen Bereich der Federeinrichtung verbundenen Halteeinrichtung ist dann im Sinne der Erfindung der Federeinrichtung zuzuordnen. Trotz der Vereinfachung des Aufbaus der Federeinrichtung ermöglicht es die einstückige Ausbildung jedoch, dass gleichzeitig die Dämpfungseigenschaften trotz der Integration der Federfunktion und der Dämpfungsfunktion in einem Bauteil im Wesentlichen frei veränderbar ist. Insbesondere wird durch die Ausbildung der Federeinrichtung als gummielastisches Drehfederelement ermöglicht, dass ein Mehrkomponentenkunststoffteil ausgebildet wird, welches die federnde Lagerung an dem Halterahmen des Fahrzeugs ermöglicht und gleichzeitig veränderbare Dämpfungseigenschaften aufweist.

So wird insbesondere vorgeschlagen, dass die Federeinrichtung stoffschlüssig mit einer Halteeinrichtung, über die eine Befestigung an der Tragstruktur des Fahrzeugs ermöglicht wird, ausgebildet ist. Andererseits ist die Federeinrichtung, insbesondere mittels eines, vorzugsweise stoffschlüssig mit diesem verbundenen Halteelement, formschlüssig mit der Koppelschwinge verbunden.

Durch eine Torsion des Drehfederelements zwischen der Halterung und der Achseinrichtung bzw. Wippe der Koppelschwinge wird es ermöglicht, eine Rückstellkraft auf die an der Wippe befestigten Stützrollen aufzubauen. Dabei ist die Kraft durch die Geometrie und das Material der Drehfeder festgelegt. Gleichzeitig wirkt die Federeinrichtung auch als Reibpartner für ein Reibelement, wobei ein Anpressdruck des Reibelements auf die Federeinrichtung verändert werden kann und dadurch die Dämpfungseigenschaften veränderbar sind.

Hierbei ist besonders bevorzugt, dass eine Achseinrichtung der Koppelschwinge die Federeinrichtung, vorzugsweise zusammen mit der Halteeinrichtung, zumindest bereichsweise durchdringt. Während eine Übertragung der Federkräfte der Federeinrichtung über die stoffschlüssige Verbindung zwischen der Halteeinrichtung und dem Drehfederelement und der formschlüssigen Verbindung zwischen dem Drehfederelement und der Wippe erfolgt, kann der Anpressdruck des Reibelements auf eine Reiboberfläche unabhängig über eine Schraubverbindung des Reibelements mit der Achseinrichtung verändert werden.

Somit ergibt sich insgesamt ein kompakter und konstruktiv einfacher Aufbau, so dass das für die Federeinrichtung und die Dämpfungseinrichtung notwendige Bauvolumen deutlich verringert werden kann und gleichzeitig eine verbesserte Ausfallsicherheit erreicht werden kann.

Weitere Merkmale und Vorteile der Erfindung ergeben sich aus der nachfolgenden Beschreibung, in der ein Ausführungsbeispiel der Erfindung anhand von schematischen Zeichnungen erläutert ist.

Dabei zeigt:
- Figur 1: eine perspektivische Aufsicht auf eine Koppelschwinge umfassend eine erfindungsgemäße Lagerung; und
- Figur 2: eine Detailansicht der Koppelschwinge der Figur 1 gemäß dem Ausschnitt A.

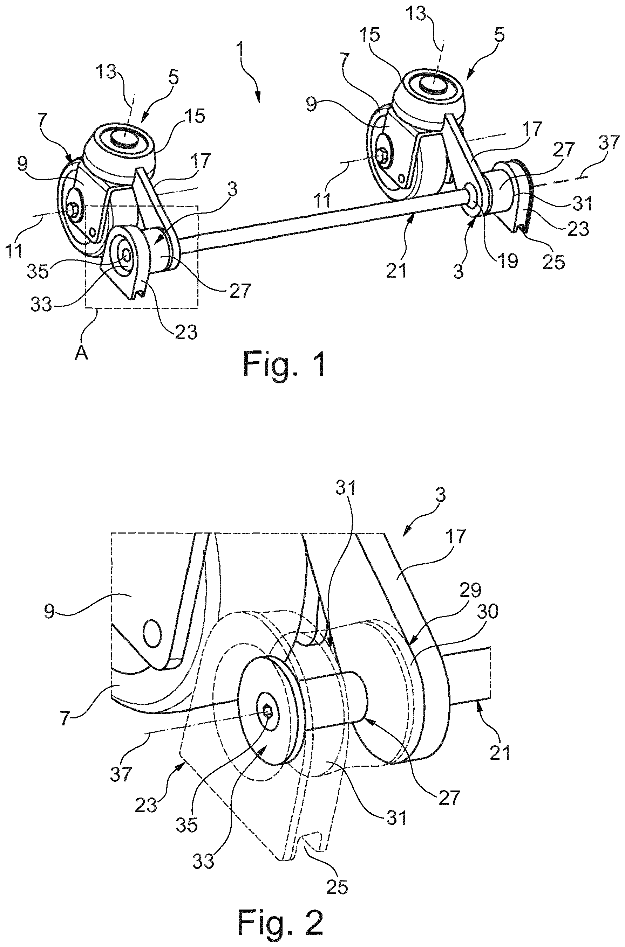

In Figur 1 ist eine erfindungsgemäße Koppelschwinge 1 dargestellt. Die Koppelschwinge 1 weist zwei erfindungsgemäße Lagerungen 3 auf. Die Lagerungen 3 ermöglichen es, dass Stützrollen 5 mit einem vorgegebenen Anpressdruck auf einer nicht dargestellten Auflagefläche aufliegen. Die Stützrollen 5 sind als frei schwenkbare Stützrollen ausgebildet. Dabei weisen Stützrollen 5 Rollenelemente 7 auf, die in einer Rollengabel 9 um eine Rollachse 11 drehbar gelagert sind. Die Rollengabel 9 ist wiederrum schwenkbar um eine Schwenkachse 13 in einer ersten Verbindungseinrichtung 15 gelagert.

Mittels der ersten Verbindungseinrichtung 15 ist die jeweilige Stützrolle 5 mit einer Wippe 17 verbunden. Die Wippe 17 ist wiederum stoffschlüssig mittels einer zweiten Verbindungseinrichtung in Form einer Schweißverbindung 19 drehmitnahmesicher mit einer Achseinrichtung 21 verbunden.

Wie insbesondere der Figur 2 zu entnehmen ist, weist die Lagerung 3 eine Halteeinrichtung 23 auf, mittels der die Koppelschwinge 1 an einer nicht dargestellten Tragstruktur des Fahrzeugs befestigt werden kann. Hierzu weist die Halteeinrichtung 23 Verbindungselemente 25 auf.

Die Lagerung 3 weist insbesondere eine mechanisch zwischen der Halteeinrichtung 23 und der Wippe 19 bzw. der Achseinrichtung 21 angeordnete Federeinrichtung 27 auf. Die Federeinrichtung 27 ist als Drehfederelement, welches bereichsweise ein Polyurethanmaterial umfasst, ausgebildet. Dabei ist die Federeinrichtung 27 über eine zweite Verbindungseinrichtung 29 mit der Wippe 17 und damit der Achseinrichtung 21 drehmitnahmesicher verbunden. Hierzu umfasst die dritte Verbindungseinrichtung zumindest ein, vorzugsweise Polyamid umfassendes Halteelement 30, das stoffschlüssig mit der Federeinrichtung 27 verbunden ist. Insbesondere findet eine formschlüssige Verbindung zwischen der Wippe 17 und dem der Wippe 17 zugewandten Ende der Federeinrichtung 27, insbesondere dem stoffschlüssig mit diesem verbundenen Halteelement 30 statt. In alternativen Ausbildungen kann der gummielastische Bereich der Federeinrichtung 27 auch direkt formschlüssig mit der Wippe 17 bzw. der Achseinrichtung 21 verbunden sind. Hierzu kann die Achseinrichtung 21 und/oder die Wippe 17 beispielsweise bereichsweise von dem gummielastischen Material der Federeinrichtung umgeben sin, insbesondere mittels Umspritzung.

Ferner ist die Federeinrichtung 27 mittels einer dritten Verbindungseinrichtung 31 mit der Halteeinrichtung 23 verbunden. Dabei besteht die Halteeinrichtung 23 aus einem Kunststoffmaterial, insbesondere Hartkunststoffmaterial, wie Polyamid, und eine Verbindung zwischen der Federeinrichtung 27 und der Halteeinrichtung 23 erfolgt über eine stoffschlüssige Verbindungseinrichtung 31. Damit ist die Halteeinrichtung 23 aufgrund des Stoffschluss einstückig mit der Federeinrichtung 27 ausgebildet.

Insgesamt stellt die Federeinrichtung 27 in diesem Beispiel also ein im Sinne der Erfindung einstückig ausgebildetes Mehrkomponenten-Kunststoffteil dar, umfassend den ein gummielastisches Material umfassenden Bereich, an dem mittels Stoffschluss die Halteinrichtung 23 und das Halteelement 30 befestigt sind. Mit anderen Worten umfasst also die Federeinrichtung 27 die stoffschlüssig verbundene Halteinrichtung und das stoffschlüssig verbundene Halteelement 30.

Wie Figur 2 weiterhin zu entnehmen ist, wird die Federeinrichtung 27 von der Achseinrichtung 21 durchdrungen. Die Federeinrichtung 27 sitzt also drehbar auf der Achseinrichtung 21, wobei die Übertragung der Federkräfte über die stoffschlüssige Verbindung zwischen der Halteeinrichtung 23 und dem gummielastischen Bereich der Federeinrichtung 27 sowie die formschlüssige Verbindung des stoffschlüssig mit dem gummielastischen Bereich der Federeinrichtung 27 verbundenen Halteelements 30 mit der Wippe 17 bzw. Achseinrichtung 21 erfolgt.

Auf dem der Wippe 17 abgewandten Ende der Achseinrichtung 21 ist ein Reibelement 33 befestigt. Über eine Schraubverbindung 35 kann ein Anpressdruck des Reibelements 33 auf die als Reiboberfläche wirkende Oberfläche der Halteeinrichtung 23 verändert werden. Durch eine Veränderung des Anpressdrucks mittels der Schraubverbindung 35 kann die Wirkung des als Reibdämpfer wirkenden Reibelements 33 verändert werden und so eine Dämpfung der Drehbewegung der Achseinrichtung 21 um eine Drehachse 37 verändert werden. Die Federeinrichtung 27, genauer die Halteinrichtung 23 der Federeinrichtung, stellt also einen Reibpartner der Reibdämpfung bereit.

In alternativen, nicht dargestellten Ausführungsformen, kann das Reibelement 33 auch direkt auf einer Oberfläche des gummielastischen Bereichs der Federeinrichtung 27 aufliegen, die dann als Reiboberfläche wirkt. Hierzu weist die Halteeinrichtung eine entsprechende Aussparung zur Aufnahme des Reibelements auf.

Im Gegensatz zu aus dem Stand der Technik bekannten Koppelschwingen ermöglicht es die Erfindung, dass eine Federeinrichtung, mittels der die Koppelschwinge an einer Tragstruktur des Fahrzeugs befestigt ist, konstruktiv einfach ausgebildet werden kann, indem die Federeinrichtung durch ein Mehrkomponentenkunststoffteil in Form eines Drehfederelements ausgebildet wird.

So wird die Federwirkung der Federeinrichtung durch die Dimension und das Material des Drehfederelements festgelegt. Diese Festlegung kann unabhängig von den Dämpfungseigenschaften der Dämpfungseinrichtung, die teilweise einstückig mit dem Drehfederelement ausgebildet ist, verändert werden. So wechselwirkt die Federeinrichtung mit einem Reibelement, welches als Reibdämpfer wirkt.

Die in der vorstehenden Beschreibung, in den Ansprüchen und in den Zeichnungen offenbarten Merkmale können sowohl einzeln als auch in beliebiger Kombination wesentlich für die Erfindung in ihren verschiedenen Ausführungsformen sein.

### Bezugszeichenliste

- A: Ausschnitt

- 1: Koppelschwinge
- 3: Lagerung
- 5: Stützrolle
- 7: Rollenelement
- 9: Rollengabel
- 11: Rollachse
- 13: Schwenkachse
- 15: Verbindungseinrichtung
- 17: Wippe
- 19: Schweißverbindung
- 21: Achseinrichtung
- 23: Halteeinrichtung
- 25: Verbindungselement
- 27: Federeinrichtung
- 29: Verbindungseinrichtung
- 30: Halteelement
- 31: Verbindungseinrichtung
- 33: Reibelement
- 35: Schraubverbindung
- 37: Drehachse

## Patentansprüche

1. Lagerung (3) für zumindest eine sich auf zumindest einer Auflagefläche abstützende Stützrolle (5) eines Wagens, umfassend
zumindest eine um zumindest eine Drehachse (37) drehbare Achseinrichtung (21), zumindest eine mitnahmesicher mit der Achseinrichtung (21) verbundene Wippe (17), wobei die Wippe (17) an einem der Achseinrichtung (21) gegenüberliegenden Ende zumindest eine erste Verbindungseinrichtung (15) zur Verbindung der Wippe (17) mit der Stützrolle (5) aufweist,
zumindest eine Federeinrichtung (27), die mechanisch zwischen einerseits der Achseinrichtung (21) und/oder der Wippe (17) und andererseits zumindest einer Halteeinrichtung (23) angeordnet ist, wobei mittels der Federeinrichtung (27) auf die Achseinrichtung (21) und die Wippe (17) eine die Stützrolle (5) auf die Auflagefläche zwingende Kraft aufbaubar ist, und
zumindest eine Dämpfungseinrichtung (27, 33, 35), mittels der eine Drehbewegung der Achseinrichtung (21) um die Drehachse (37) dämpfbar ist, **dadurch gekennzeichnet, dass** die Federeinrichtung und die Dämpfungseinrichtung zumindest bereichsweise einstückig durch zumindest ein zumindest bereichsweise gummielastisch ausgebildetes Torsionsfederelement (27) ausgebildet sind.

2. Lagerung nach Anspruch 1, **dadurch gekennzeichnet, dass**
die Stützrolle (5) zumindest eine um zumindest eine Rollachse (11) drehbares Rollenelement (7) umfasst, wobei vorzugweise das Rollenelement (7) in zumindest einer Rollengabel (9) gelagert ist, insbesondere die Rollengabel (9) um zumindest eine im wesentlichen senkrecht zu der Rollachse (11) und/oder der Drehachse (37) verlaufende Schwenkachse (13) gelagert ist, wobei vorzugsweise sich die Schwenkachse (13) und Rollachse (11) schneiden oder windschief zueinander verlaufen.

3. Lagerung nach Anspruch 1 oder 2, **dadurch gekennzeichnet, dass**
das Fahrzeug in Form zumindest eine Trailers, zumindest eines Lastenwagens und/oder zumindest eines Hubwagens, vorzugweise eines Gabelhubwagens, insbesondere mit einem Fünfradfahrwerk, ausgebildet ist, und/oder zumindest eine Tragstruktur, wie zumindest einen Tragrahmen umfasst, wobei vorzugweise die Halteeinrichtung (23) sich auf der der Federeinrichtung (27) abgewandten mechanischen Seite zumindest indirekt an der Tragstruktur abstützt, insbesondere mit der Tragstruktur verbunden ist.

4. Lagerung nach einem der vorangehenden Ansprüche, **dadurch gekennzeichnet, dass**
die Drehachse (37) im Wesentlichen senkrecht zu der Normalenrichtung der Auflagefläche verläuft.

5. Lagerung nach einem der vorangehenden Ansprüche, **gekennzeichnet durch**
eine Mehrzahl von mit der Achseinrichtung (21) verbundenen Wippen (17) und/oder eine Mehrzahl von Stützrollen (5), wobei jede Wippe (17) zumindest eine erste Verbindungseinrichtung (15) zur Verbindung mit zumindest einer Stützrolle (5) und/oder zur Verbindung der Wippe (17) mit zumindest zwei Stützrollen umfasst und/oder die Lagerung von zumindest einer Koppelschwinge (1) umfasst ist.

6. Lagerung nach einem der vorangehenden Ansprüche, **dadurch gekennzeichnet, dass** einerseits die Achseinrichtung (21) und andererseits die Wippe (17) und/oder Wippen (17) mittels zumindest einer zweiten Verbindungseinrichtung (19) miteinander verbunden sind, wobei die zweite Verbindungeinrichtung vorzugweise zumindest eine kraftschlüssig, formschlüssig und/oder stoffschlüssig wirkende Verbindung umfasst, insbesondere zumindest eine Schweißverbindung (19), Schraubverbindung, Rastverbindung, Steckverbindung und/oder Pressverbindung.

7. Lagerung nach einem der vorangehenden Ansprüche, **dadurch gekennzeichnet, dass**
die Federeinrichtung (27) zumindest ein duroplastisches, thermoplastisches und/oder elastomeres Material, wie Polyurethan, Ethylen-Polypropylen-Dien-Kautschuk (EPDM), Kautschuk und/oder Gummi, umfasst.

8. Lagerung nach einem der vorangehenden Ansprüche, **dadurch gekennzeichnet, dass**
die Federeinrichtung (27) mittels zumindest einer, vorzugsweise zumindest ein Halteelement (30) umfassenden, dritten Verbindungseinrichtung (29) mit der Achseinrichtung (21) und/oder der Wippe (17) bzw. zumindest einer Wippe (17) verbunden ist, wobei vorzugsweise die dritte Verbindungseinrichtung (31) zumindest eine kraftschlüssig, formschlüssig und/oder stoffschlüssig wirkende Verbindung umfasst, insbesondere zumindest eine Schweißverbindung, Adhäsionsverbindung, Vulkanisationsverbindung, Nut-Feder-Verbindung, Verbindung (29) umfassend zumindest eine in zumindest eine Vertiefung eingreifende Erhebung, Steckverbindung, Rastverbindung und/oder Pressverbindung, wobei vorzugsweise die Federeinrichtung (27) stoffschlüssig mit dem Halteelement (30) und/oder das Halteelement formschlüssig mit der Wippe (17) und/oder der Achseinrichtung (21) verbunden ist bzw. sind.

9. Lagerung nach einem der vorangehenden Ansprüche, **dadurch gekennzeichnet, dass**
die Achseinrichtung (21) und/oder die Wippe (17), insbesondere im Bereich der zweiten Verbindungseinrichtung (19), zumindest eine metallisches Material und/oder, insbesondere im Bereich der dritten Verbindungseinrichtung (29), zumindest ein Kunststoffmaterial, vorzugsweise Hartkunststoffmaterial, umfasst bzw. umfassen.

10. Lagerung nach einem der vorangehenden Ansprüche, **dadurch gekennzeichnet, dass**
die Federeinrichtung (27) mittels zumindest einer vierten Verbindungseinrichtung (31) mit der Halteeinrichtung (23) verbunden ist, wobei die vierte Verbindungseinrichtung (31) vorzugsweise zumindest eine kraftschlüssige, formschlüssige und/oder stoffschlüssige Verbindung umfasst, insbesondere zumindest eine Schweißverbindung, Adhäsionsverbindung, Vulkanisationsverbindung (31), Nut-Feder-Verbindung, Verbindung umfassend zumindest eine in zumindest eine Vertiefung eingreifende Erhebung, Steckverbindung, Rastverbindung und/oder Pressverbindung.

11. Lagerung nach einem der vorangehenden Ansprüche, **dadurch gekennzeichnet, dass**
die Halteeinrichtung (23), insbesondere im Bereich der vierten Verbindungeinrichtung (31), und/oder das Haltelement (30) zumindest ein Kunststoffmaterial, insbesondere ein Hartkunststoffmaterial, wie Polyamid, umfasst bzw. umfassen.

12. Lagerung nach einem der vorangehenden Ansprüche, **dadurch gekennzeichnet, dass**
die Dämpfungseinrichtung zumindest ein sich auf zumindest einer Reiboberfläche der Halteeinrichtung (23) und/oder Federeinrichtung (27) abstützendes und drehmitnahmesicher mit der Achseinrichtung (21) und/oder der Wippe (17) verbundenes Reibelement (33) umfasst.

13. Lagerung nach Anspruch 12, **dadurch gekennzeichnet, dass**
eine Reibkraft, mit der sich das Reibelement (33) auf der Reiboberfläche abstützt, mittels zumindest eines Einstellelements (35) veränderbar ist.

14. Lagerung nach einem der vorangehenden Ansprüche, **dadurch gekennzeichnet, dass**
die Federeinrichtung (27) zumindest bereichsweise von der Wippe (17) und/oder der Achseinrichtung (21) durchdrungen ist, wobei vorzugweise die Reiboberfläche auf einer der dritten Verbindungseinrichtung abgewandten Seite der Federeinrichtung (27) ausgebildet ist.

## Claims

1. Bearing (3) for at least one supporting roller (5) of a carriage, which supporting roller is supported on at least one bearing surface, comprising
at least one axle device (21) which can be rotated about at least one rotational axis (37), at least one rocker (17) which is connected to the axle device (21) such that it is reliably driven, wherein, at an end which lies opposite the axle device (21), the rocker (17) has at least one first connecting device (15) for connecting the rocker (17) to the supporting roller (5),
at least one spring device (27) which is arranged mechanically between the axle device (21) and/or the rocker (17) on one side and at least one holding device (23) on the other side, wherein a force which forces the supporting roller (5) onto the bearing surface can be built up on the axle device (21) and the rocker (17) by means of the spring device (27), and
at least one damping device (27, 33, 35), by means of which a rotational movement of the axle device (21) about the rotational axis (37) can be damped, **characterized in that** the spring device and the damping device are configured in one piece at least in regions by way of at least one torsion spring element (27) which is of a rubber elastic configuration at least in regions.

2. Bearing according to Claim 1, **characterized in that**
the supporting roller (5) comprises at least one roller element (7) which can be rotated around at least one rolling axis (11), wherein the roller element (7) is preferably mounted in at least one roller fork (9), in particular the roller fork (9) is mounted around at least one pivot axis (13) which runs substantially perpendicularly to the rolling axis (11) and/or the rotational axis (37), wherein the pivot axis (13) and the rolling axis (11) preferably intersect or run in a skewed manner in relation to each other.

3. Bearing according to Claim 1 or 2, **characterized in that**
the vehicle is configured in the form of at least a trailer, at least a load truck and/or at least a lift truck, preferably a forklift truck, in particular with a five wheel chassis, and/or comprises at least one support structure, such as at least one support frame, wherein the holding device (23) is preferably supported on the mechanical side facing away from the spring device (27) at least indirectly on the support structure, in particular is connected to the support structure.

4. Bearing according to one of the preceding claims, **characterized in that**
the rotational axis (37) runs substantially perpendicularly to the normal direction of the bearing surface.

5. Bearing according to one of the preceding claims, **characterized by**
a plurality of rockers (17) connected to the axle device (21) and/or a plurality of supporting rollers (5), wherein every rocker (17) comprises at least one first connecting device (15) for connection to at least one supporting roller (5) and/or for connecting the rocker (17) to at least two supporting rollers and/or the bearing is comprised of at least one coupling torsion bar (1).

6. Bearing according to one of the preceding claims, **characterized in that**
the axle device (21) on one side and the rocker (17) and/or rockers (17) on the other side are connected to one another by means of at least one second connecting device (19), wherein the second connecting device preferably comprises at least one connection acting in a force fitting, form fitting, and/or integrally bonded manner, in particular at least one welded connection (19), screw connection, snap-on connection, plug connection and/or press connection.

7. Bearing according to one of the preceding claims, **characterized in that**
the spring device (27) comprises at least one thermosetting, thermoplastic and/or elastomer material, such as polyurethane, ethylene propylene diene monomer (EPDM), caoutchouc and/or rubber.

8. Bearing according to one of the preceding claims, **characterized in that**
the spring device (27) is connected to the axle device (21) and/or the rocker (17) or at least one rocker (17) by means of at least one, preferably at least one holding element (30) comprising a third connecting device (29), wherein the third connecting device (31) preferably comprises at least one connection acting in a force fitting, form fitting, and/or integrally bonded manner, in particular at least one welded connection, adhesive connection, vulcanized connection, tongue and groove connection, connection (29) comprising at least one projection engaging in at least one recess,
plug connection, snap-on connection and/or press connection, wherein the spring device (27) preferably is connected to the holding element (30) in an integrally bonded manner and/or the holding element is connected to the rocker (17) and/or the axle device (21) in a form fitting manner.

9. Bearing according to one of the preceding claims, **characterized in that**
the axle device (21) and/or the rocker (17) comprise, in particular in the region of the second connecting device (19), at least one metallic material and/or, in particular in the region of the third connecting device (29), at least one plastic material, preferably a hard plastic material.

10. Bearing according to one of the preceding claims, **characterized in that**
the spring device (27) is connected to the holding device (23) by means of at least one fourth connecting device (31), wherein the fourth connecting device (31) preferably comprises at least one force fitting, form fitting, and/or integrally bonded connection, in particular at least one welded connection, adhesive connection, vulcanized connection (31), tongue and groove connection, connection comprising at least one projection engaging in at least one recess, plug connection, snap-on connection and/or press connection.

11. Bearing according to one of the preceding claims, **characterized in that**
the holding device (23), in particular in the region of the fourth connecting device (31), and/or the holding element (30) comprise at least one plastic material, in particular a hard plastic material, such as polyamide.

12. Bearing according to one of the preceding claims, **characterized in that**
the damping device comprises at least one friction element (33), which is connected to the axle device (21) and/or the rocker (17) so that it is reliably driven rotationally and is supported on at least one friction surface of the holding device (23) and/or spring device (27).

13. Bearing according to Claim 12, **characterized in that**
a frictional force, with which the friction element (33) is supported on the friction surface, can be changed by means of at least one adjusting element (35).

14. Bearing according to one of the preceding claims, **characterized in that**
the spring device (27) is penetrated at least in regions by the rocker (17) and/or the axle device (21), wherein preferably the friction surface is configured on a side of the spring device (27) facing away from the third connecting device.

## Revendications

1. Palier (3) pour au moins une roulette d'appui (5), en appui sur au moins une surface
de contact, d'un chariot, comprenant
au moins un dispositif d'axe (21) rotatif autour d'au moins un axe de rotation (37), au moins une bascule (17) raccordée au dispositif d'axe (21) de manière solidaire en rotation, ladite bascule (17) comportant au moins un premier dispositif de connexion (15) à une extrémité opposée au dispositif d'axe (21), pour le raccordement de la bascule (17) à la roulette d'appui (5),
au moins un dispositif à ressort (27), mécaniquement disposé entre le dispositif d'axe (21) et/ou la bascule (17) d'une part, et au moins un dispositif de retenue (23) d'autre part, une force contraignant la roulette d'appui (5) sur la surface de contact pouvant être exercée sur le dispositif d'axe (21) et la bascule (17) au moyen dudit dispositif à ressort (27), et
au moins un dispositif d'amortissement (27, 33, 35), au moyen duquel un mouvement de rotation du dispositif d'axe (21) autour de l'axe de rotation (37) peut être amorti, **caractérisé en ce que** le dispositif à ressort et le dispositif d'amortissement sont réalisés au moins en partie d'un seul tenant par au moins un élément à ressort de torsion (27) prévu au moins partiellement avec une élasticité de caoutchouc.

2. Palier selon la revendication 1, **caractérisé en ce que** la roulette d'appui (5) comprend au moins un élément de roulette (7) rotatif autour d'au moins un axe de roulette (11), ledit élément de roulette (7) étant préférentiellement monté dans au moins une fourche de roulette (9), la fourche de roulette (9) étant en particulier montée autour d'au moins un axe de pivotement (13) s'étendant perpendiculairement à l'axe de roulette (11) et/ou à l'axe de rotation (37), l'axe de pivotement (13) et l'axe de roulette (11) se croisant préférentiellement ou s'étendant sans s'intersecter l'un avec l'autre.

3. Palier selon la revendication 1 ou la revendication 2, **caractérisé en ce que** le véhicule est prévu sous la forme d'au moins une remorque, d'au moins une camionnette et/ou d'au moins un chariot élévateur, préférentiellement d'un chariot à fourche, en particulier avec un train de roulement à cinq roues, et/ou comprend au moins une structure porteuse telle qu'au moins un châssis support, le dispositif de retenue (23) s'appuyant préférentiellement au moins indirectement sur la structure porteuse sur le côté mécanique distant du dispositif à ressort (27), et étant en particulier raccordé à la structure porteuse.

4. Palier selon l'une des revendications précédentes, **caractérisé en ce que** l'axe de rotation (37) s'étend sensiblement perpendiculairement à la direction de la normale de la surface de contact.

5. Palier selon l'une des revendications précédentes, **caractérisé par** une pluralité de bascules (17) raccordées au dispositif d'axe (21) et/ou une pluralité de roulettes d'appui (5), chaque bascule (17) comprenant au moins un premier dispositif de connexion (15) pour le raccordement à au moins une roulette d'appui (5) et/ou pour le raccordement de la bascule (17) à au moins deux roulettes d'appui et/ou le palier étant compris dans au moins une bascule d'accouplement (1).

6. Palier selon l'une des revendications précédentes, **caractérisé en ce que** le dispositif d'axe (21), d'une part, et la bascule (17) et/ou les bascules (17), d'autre part, sont raccordés entre eux au moyen d'au moins un deuxième dispositif de connexion (19), le deuxième dispositif de connexion comprenant préférentiellement au moins une connexion par liaison de force, par correspondance de forme et/ou par liaison de matière, en particulier au moins une connexion soudée (19), par vis, par enclenchement, par fiche et/ou par pression.

7. Palier selon l'une des revendications précédentes, **caractérisé en ce que** le dispositif à ressort (27) comprend au moins un matériau thermodurcissable, thermoplastique et/ou élastomère, tel que polyuréthane, éthylène-propylène-diène monomère (EPDM), caoutchouc et/ou gomme.

8. Palier selon l'une des revendications précédentes, **caractérisé en ce que** le dispositif à ressort (27) est raccordé au dispositif d'axe (21) et/ou à la bascule (17), ou à au moins une bascule (17) au moyen d'au moins un troisième dispositif de connexion (29), comprenant préférentiellement au moins un élément de retenue (30), ledit troisième dispositif de connexion (31) comprenant préférentiellement au moins une connexion par liaison de force, par correspondance de forme et/ou par liaison de matière, en particulier au moins une connexion soudée, par adhérence, par vulcanisation, à rainure et languette, ladite connexion (29) comprenant au moins une saillie s'engageant dans au moins un évidement, une connexion à fiche, par enclenchement et/ou par pression, le dispositif à ressort (27) étant préférentiellement raccordé par liaison de matière à l'élément de retenue (30) et/ou l'élément de retenue étant raccordé par correspondance de forme à la bascule (17) et/ou au dispositif d'axe (21).

9. Palier selon l'une des revendications précédentes, **caractérisé en ce que** le dispositif d'axe (21) et/ou la bascule (17), en particulier au niveau du deuxième dispositif de connexion (19), comprennent au moins un matériau métallique et/ou, en particulier au niveau du troisième dispositif de connexion (29), au moins un matériau plastique, préférentiellement en plastique dur.

10. Palier selon l'une des revendications précédentes, **caractérisé en ce que** le dispositif à ressort (27) est raccordé au dispositif de retenue (23) au moyen d'au moins un quatrième dispositif de connexion (31), ledit quatrième dispositif de connexion (31) comprenant préférentiellement au moins une connexion par liaison de force, par correspondance de forme et/ou par liaison de matière, en particulier au moins une connexion soudée, par adhérence, par vulcanisation (31), à rainure et languette, ladite connexion comprenant au moins une saillie s'engageant dans au moins un évidement, une connexion à fiche, par enclenchement et/ou par pression.

11. Palier selon l'une des revendications précédentes, **caractérisé en ce que** le dispositif de retenue (23), en particulier au niveau du quatrième dispositif de connexion (31), et/ou l'élément de retenue (30) comprennent au moins un matériau plastique, en particulier un plastique dur tel que polyamide.

12. Palier selon l'une des revendications précédentes, **caractérisé en ce que** le dispositif d'amortissement comprend au moins un élément de friction (33) s'appuyant sur au moins une surface de friction du dispositif de retenue (23) et/ou du dispositif à ressort (27) et raccordé au dispositif d'axe (21) et/ou à la bascule (17) de manière solidaire en rotation.

13. Palier selon la revendication 12, **caractérisé en ce qu'**une force de friction par laquelle l'élément de friction (33) s'appuie sur la surface de friction peut être variée au moyen d'au moins un élément de réglage (35).

14. Palier selon l'une des revendications précédentes, **caractérisé en ce que** le dispositif à ressort (27) est traversé au moins en partie par la bascule (17) et/ou le dispositif d'axe (21), la surface de friction étant préférentiellement formée sur un côté du dispositif à ressort (27) distant du troisième dispositif de connexion.
